# FASCICULE DE BREVET EUROPEEN

(11) **EP 3 347 519 B1**
(45) Date de publication et mention de la délivrance du brevet: **11.03.2020**
(21) Numéro de dépôt: 16763804.8
(22) Date de dépôt: 09.09.2016
(51) Int. Cl.: D06F 58/28, B01D 46/10, G01M 3/20, D06F 39/08, D06F 39/10, D06F 58/22, B01D 46/44

(54) **SECHOIR, EN PARTICULIER POUR LE SECHAGE DE VETEMENTS ET D'ACCESSOIRES POUR SALLE BLANCHE**
TROCKNER, INSBESONDERE ZUM TROCKNEN VON REINRAUMKLEIDUNG UND ZUBEHÖR
DRYER, PARTICULARLY FOR DRYING CLEAN-ROOM GARMENTS AND ACCESSORIES

(30) Priorité: 11.09.2015 BE 201505568
(43) Date de publication de la demande: 18.07.2018
(73) Titulaire: Manoha, 7970 Beloeil (BE)
(72) Inventeur: GÉRARD, Patrick, 7811 Arbre (BE)
(74) Mandataire: Calysta NV
(86) Numéro de dépôt international: PCT/EP2016/071323
(87) Numéro de publication internationale: WO 2017/042343

(56) Documents cités:
- EP-A2- 2 196 250
- JP-A- H08 136 437
- JP-A- S58 210 819
- US-A- 3 614 421
- US-A- 3 765 225
- US-A- 4 055 075
- US-A1- 2003 126 691
- US-A1- 2012 017 457

## Description

La présente invention se rapporte à un séchoir, en particulier pour le séchage de vêtements et d'accessoires pour salle blanche, comprenant :
- un corps de séchoir,
- une chambre de séchage,
- un système de circulation d'air entre une entrée d'air et ladite chambre de séchage, ce système comprenant
   - un dispositif d'aspiration d'air conférant un sens d'écoulement à l'air depuis l'entrée d'air vers ladite chambre de séchage,
   - un dispositif de chauffage de l'air aspiré placé en amont de ladite chambre de séchage, et
   - un filtre absolu placé en amont de ladite chambre de séchage.

Des séchoirs pour le séchage des vêtements sont connus par exemple du document US 2012/017457 A1.

Un séchoir tel qu'indiqué plus haut est connu de l'état de la technique et peut par exemple être utilisé pour procéder au séchage de vêtements ou d'accessoires (lunettes de protection, sabots, ...) pour salle blanche ou pour tout autre domaine d'activité. Dans les procédés de nettoyage et de conditionnement des vêtements ou d'accessoires pour salle blanche, le passage de ces derniers dans un séchoir est déterminant en ce sens que leur décontamination est essentiellement réalisée à ce stade. En effet, les vêtements ou les accessoires sont soumis à des températures de l'ordre de 0°C à 120°C dans la chambre de séchage du séchoir, ce qui permet à la fois d'en d'éliminer des particules indésirables qui y seraient accrochées mais aussi d'éliminer, sous l'effet de la température, des bactéries ou d'autres contaminants qui auraient résistés aux précédentes étapes de nettoyage.

Au sens de la présente invention, les termes « chambre de séchage » peuvent désigner un tambour rotatif, un panier, un tiroir ou encore tout autre dispositif pouvant contenir du linge et/ou des accessoires (lunettes de protection, sabots, ...) et/ou tout autre élément à sécher pour salle blanche ou non. Lorsque la chambre de séchage se présente sous le forme d'un tambour rotatif ou d'un panier inséré dans le séchoir, le séchoir sera muni d'une porte (par exemple d'un hublot). Par contre, lorsque la chambre de séchage se présente sous la forme d'un ou de plusieurs tiroirs, le ou les tiroirs peuvent eux-mêmes jouer le rôle de porte.

Lorsque le séchoir est utilisé afin de procéder au séchage de vêtements ou d'accessoires pour salle blanche, il sera indispensablement situé dans une pièce répondant à des normes strictes en termes de présence de particules dans l'air puisque le traitement de vêtements ou d'accessoires pour salle blanche doit garantir que ces derniers seront exempts de tout contaminant afin qu'ils ne constituent pas des sources de contamination, par exemple d'un milieu environnant telle qu'une salle d'opération. A cette fin, puisque de fortes turbulences ont lieu dans le séchoir et que divers contaminants sont ainsi arrachés des vêtements ou des accessoires pour salle blanche ou autre, il convient d'éviter que ces particules ne puissent gagner la pièce de conditionnement de vêtements pour salle blanche lors de l'étape de séchage. C'est pourquoi, classiquement, la chambre de séchage du séchoir doit être en dépression par rapport à la pression régnant dans l'environnement extérieur du séchoir. Ceci permet d'assurer que les particules issues des vêtements ou des accessoires et présentes dans l'air de séchage au sein de la chambre de séchage ne gagnent pas et ne contaminent pas l'air ambiant extérieur au séchoir.

Il est évident qu'un paramètre essentiel lors de l'étape de séchage des vêtements ou des accessoires pour salle blanche ou autre est la qualité de l'air entrant dans la chambre de séchage du séchoir. Il convient en effet que de l'air aussi propre que possible, c'est-à-dire qu'un air exempt de particules gagne la chambre de séchage. C'est pourquoi, les séchoirs sont classiquement munis d'un filtre absolu (filtre de haute efficacité) au travers duquel passe de l'air aspiré au départ d'un milieu environnant avant de gagner la chambre de séchage. Dans le cadre de la présente invention, de préférence, afin que de l'air considéré comme étant exempt de particules gagne la chambre de séchage, un filtre de classe H13 présentant une efficacité d'épuration de 99,95% ou un filtre de classe supérieure (H14, U15, U16, U17) est utilisé selon la norme européenne EN1822.

Le filtre absolu constitue donc un élément déterminant quant à la qualité du séchage et conditionne véritablement le degré de décontamination des vêtements ou des accessoires pour salle blanche ou autre lors du processus de nettoyage. Pour cette raison, ponctuellement, il convient de vérifier l'efficacité et l'intégrité des filtres absolus pour s'assurer qu'ils ne présentent ni fissures ni fuites, auquel cas des contaminants pourraient gagner la chambre de séchage. Classiquement, l'intégrité des filtres est mesurée et évaluée en réalisant un test mettant en œuvre des gouttelettes d'aérosol de dioctyl phtalate (DOP) (test DOP) tel que décrit dans US 4 055 075 A. Ce test permet de mesurer l'efficacité et l'intégrité d'un filtre en termes de rétention des particules présentes dans l'air, sur la base de la rétention de gouttelettes de DOP calibrée par exemple à 0,3 µm selon la méthode ASTM D 2986-71. A titre d'exemple, si une rétention de 99,97% de gouttelettes (particules) DOP est observée selon cette méthode, on qualifie alors le filtre de filtre à haute efficacité (HEPA).

Plus particulièrement, les tests DOP reposent sur la génération d'un aérosol en amont d'un filtre à tester, cette génération ayant pour objectif de saturer la face amont (supérieure) du filtre. Afin de détecter des fuites et/ou des fissures, un dispositif de mesure (par exemple un photomètre) est utilisé pour scanner la face inférieure en aval du filtre et mesurer la quantité de particules (gouttelettes) DOP parvenant à traverser le filtre absolu. Notons que le DOP est petit à petit remplacé par du sébacate de dioctyle (DEHS), la méthode de mesure de l'intégrité des filtres restant identique.

Malheureusement, même si les séchoirs à linge ou les séchoirs pour accessoires pour salle blanche ou autre actuels comprennent un filtre absolu permettant que de l'air exempt de particules ou en contenant très peu gagne la chambre de séchage, il convient, comme indiqué ci-dessus, d'en vérifier ponctuellement l'intégrité afin de s'assurer qu'il ne présente pas de fuites et/ou de fissures au travers desquelles pourraient passer des particules contaminantes. Or, avec les séchoirs actuels, une telle vérification est particulièrement contraignante puisqu'il faut procéder, au moins en partie, au démontage du séchoir pour en extraire le filtre absolu puis orienter ce dernier vers une enceinte spécifique indépendante où son intégrité pourra être testée. Le filtre absolu étant généralement localisé sous un dispositif de chauffage de l'air entrant dans le séchoir (batterie de chauffe), y accéder est compliqué et le risque d'endommager le filtre lors de son extraction n'est pas négligeable.

Par ailleurs, tester l'intégrité du filtre dans une enceinte spécifique prévue à cet effet ne permet pas de vérifier, in-situ, que le filtre est bien positionné dans le séchoir puisque les méthodologies actuelles de test de l'intégrité des filtres reposent sur un retrait du filtre hors du séchoir. Or, ceci est tout aussi important que de vérifier si le filtre ne présente de fissures et/ou de fuites puisqu'un mauvais positionnement de ce dernier pourrait laisser passer des particules contaminantes, par exemple au niveau des bords du filtre si ce dernier n'est pas correctement positionné et fixé sur un cadre récepteur dans le corps de séchoir (serrage insuffisant ou trop important, écrasement d'un éventuel joint d'étanchéité, déformation du caisson dans lequel est monté le cadre récepteur,...).

En outre, dès lors qu'il est particulièrement contraignant de retirer le filtre, des mesures de contrôle de l'intégrité et de l'efficacité de ce dernier ne sont effectués que rarement et souvent bien trop tard. Par conséquent, des fuites et/ou des fissures peuvent être présentes mais n'être détectées qu'à posteriori, ce qui implique que le séchage des vêtements et/ou des accessoires, par exemple des vêtements pour salle blanche, n'est pas assurément optimal, des particules contaminantes pouvant gagner la chambre de séchage.

L'invention a pour but de pallier les inconvénients de l'état de la technique en procurant un séchoir dont l'intégrité du filtre absolu peut être testée in-situ de telle façon à pouvoir déterminer simultanément la présence de fissures et/ou de fuites et son éventuel mauvais positionnement dans le corps du séchoir, ceci sans avoir à extraire le filtre afin d'éviter tout endommagement et toute manipulation contraignante et coûteuse en temps de ce dernier.

Pour résoudre ce problème, il est prévu suivant l'invention, un séchoir tel qu'indiqué au début, caractérisé en ce qu'il comprend en outre, en amont dudit filtre absolu, un raccord agencé pour être relié un dispositif de pulsion d'air chargé en une quantité prédéterminée de gouttelettes d'un aérosol et en ce qu'il comprend un accès à un espace situé en aval dudit filtre absolu et en amont de ladite chambre de séchage, ledit accès à un espace étant agencé pour pouvoir accueillir un dispositif de mesure.

Par les termes « un raccord agencé pour être relié un dispositif de pulsion d'air chargé en une quantité prédéterminée de gouttelettes d'un aérosol », on entend, au sens de la présente invention, que le séchoir comprend un raccord mais que ce dernier n'est pas forcément relié à un dispositif de pulsion d'air chargé en une quantité prédéterminée de gouttelettes d'un aérosol. En d'autres termes, le raccord selon l'invention est susceptible d'être relié à un dispositif de pulsion d'air chargé en une quantité prédéterminée de gouttelettes d'un aérosol.

Par ailleurs, au sens de la présente invention, le terme « raccord » désigne tout élément ou toute zone du séchoir permettant d'y associer (raccorder, relier, joindre) un dispositif de pulsion d'air chargé en une quantité prédéterminée de gouttelettes d'un aérosol. Il peut par exemple s'agir d'un embout sous forme d'un tuyau sur lequel peut s'emboiter le dispositif de pulsion d'air (de préférence de façon étanche) ou tout simplement d'un espace vide (d'une ouverture) dans lequel peut s'insérer le dispositif de pulsion d'air (de préférence de façon étanche). Il est bien entendu que tout autre élément, toute autre ouverture ou encore tout autre moyen de n'importe quelle forme pouvant servir de raccord entre également dans le cadre de la présente invention.

Selon l'invention, puisque le séchoir à linge ou à accessoires (lunettes de protection, sabots, ...) comporte, en amont du filtre absolu, un raccord agencé pour être relié à un dispositif de pulsion d'air chargé en une quantité prédéterminée de gouttelettes d'un aérosol et un accès à un espace situé en aval du filtre absolu, il est tout à fait possible de réaliser un test de type DOP sans avoir à manipuler le filtre, c'est-à-dire sans avoir à l'extraire du séchoir, en pulsant de l'air via le raccord en direction et au travers du filtre et en scannant la face inférieure de ce dernier avec un dispositif de mesure de particules DOP non retenues par le filtre. Il suffit donc, suivant l'invention, de relier ledit raccord à un dispositif de pulsion d'air, lequel air est chargé en une quantité prédéterminée de gouttelettes d'aérosol de type DOP. Par exemple, l'aérosol DOP pourrait être injecté dans l'air pulsé avant son arrivée au niveau dudit raccord.

Il est dès lors particulièrement aisé de réaliser régulièrement un test DOP qui ne requiert pas de démontage du filtre, ce qui est particulièrement avantageux puisque le filtre reste positionné in-situ dans le séchoir et qu'il est donc possible, simultanément à la détection de fuites et/ou de fissures, de s'assurer que le filtre est positionné correctement (serrage suffisant, pas d'écrasement d'un éventuel joint d'étanchéité,...), ceci essentiellement le long de ses bords.

De préférence, selon l'invention, ledit espace situé en aval dudit filtre absolu s'étend sous l'ensemble dudit filtre absolu. Ceci permet notamment de procéder à un scannage de l'ensemble de la face inférieure du filtre et donc de scanner les zones du filtre qui pourraient être responsables de passage de particules contaminantes, par exemple les zones en bordure du filtre qui pourraient ne pas assurer une bonne étanchéité de ce dernier lorsqu'il est placé dans le corps du séchoir (par exemple sur un cadre de montage).

Avantageusement, selon l'invention, ledit accès à un espace situé en aval dudit filtre absolu est situé derrière une première trappe.

De préférence, selon l'invention, ledit raccord en amont dudit filtre absolu est situé derrière une deuxième trappe.

Avantageusement, selon l'invention, ladite première trappe comprend au moins un moyen d'étanchéisation permettant d'en assurer une fermeture étanche.

De préférence, selon l'invention, ladite deuxième trappe comprend au moins un moyen d'étanchéisation permettant d'en assurer une fermeture étanche.

Lorsque le séchoir est en fonction, il convient d'éviter, comme mentionné précédemment, que des particules (des contaminants) ne gagnent la chambre de séchage. Il est donc préférable que le raccord et que l'accès à l'espace situé en aval du filtre absolu soient fermés (obturés), ce qui est assuré par la présence de trappes. Par ailleurs, puisque les première et deuxième trappes donnent respectivement accès à des espaces situés en-dessous et au-dessus du filtre, il est préférable qu'elles soient munies de moyens d'étanchéisation pouvant par exemple se présenter sous forme d'un joint qui, par écrasement, assure cette étanchéité.

De préférence, selon l'invention, ledit filtre absolu est un filtre absolu à haute ou à très haute intégrité, par exemple un filtre de type EPA, HEPA ou ULPA.

De préférence, le séchoir selon l'invention comprend en outre un dispositif de pulsion d'air chargé en une quantité prédéterminée de gouttelettes d'un aérosol, ledit dispositif étant relié audit raccord.

Selon ce mode de réalisation suivant l'invention, un dispositif de pulsion d'air est raccordé (relié) au raccord et fait partie intégrante du séchoir selon l'invention. Un tel séchoir permet, plutôt que de devoir chaque fois connecter un dispositif de pulsion d'air au séchoir, de disposer d'un système (séchoir) déjà prêt à la réalisation de tests de type DOP. Ceci favorise d'autant plus la réalisation fréquente de test de type DOP puisque le filtre ne doit pas être démonté, mais qu'en plus, le dispositif de pulsion d'air est déjà connectée adéquatement au séchoir.

D'autres formes de réalisation d'un séchoir suivant l'invention sont indiquées dans les revendications annexées.

La présente invention porte aussi sur une utilisation d'un séchoir selon l'invention pour réaliser une mesure de l'intégrité dudit filtre absolu.

D'autres formes de réalisation d'utilisation d'un séchoir suivant l'invention sont indiquées dans les revendications annexées.

La présente invention porte encore sur un procédé de mesure de l'intégrité d'un filtre absolu d'un séchoir, ledit procédé comprenant les étapes suivantes :
- pulsion, au travers d'un raccord situé en amont dudit filtre absolu, d'air chargé en une quantité prédéterminée de gouttelettes d'un aérosol, et
- mesure, avec un dispositif de mesure, dans un espace situé en aval dudit filtre absolu, d'une quantité de gouttelettes dudit aérosol ayant traversé ledit filtre absolu.

Ce procédé permet de réaliser aisément, sans démontage et extraction du filtre hors du séchoir, à des tests d'intégrité et d'efficacité du filtre (test DOP par exemple). En effet, suivant l'invention, seule une pulsion d'air chargé en une quantité prédéterminée de gouttelettes d'un aérosol au travers du filtre doit être réalisée et être suivie d'une mesure, en aval de ce dernier, de la quantité de gouttelettes (particules) ayant réussi à traverser le filtre. A nouveau, ceci permet, puisque ce procédé est simple et rapide, une réalisation régulière et sans contrainte de tests permettant de vérifier l'intégrité et l'efficacité des filtres, par exemples des tests de type DOP.

Avantageusement, selon l'invention, ladite étape de pulsion d'air chargé en une quantité prédéterminée de gouttelettes d'un aérosol repose sur la pulsion d'un air chargé en gouttelettes de dioctyl phtalate ou de sébacate de dioctyle.

D'autres caractéristiques, détails et avantages de l'invention ressortiront de la description donnée ci-après, à titre non limitatif et en faisant référence aux dessins annexés.
La figure 1 est une vue schématique d'un séchoir à linge et/ou d'accessoires selon l'invention.
La figure 2 est une vue de côté d'un séchoir à linge et/ou d'accessoires selon l'invention.

Sur les figures, les éléments identiques ou analogues portent les mêmes références.

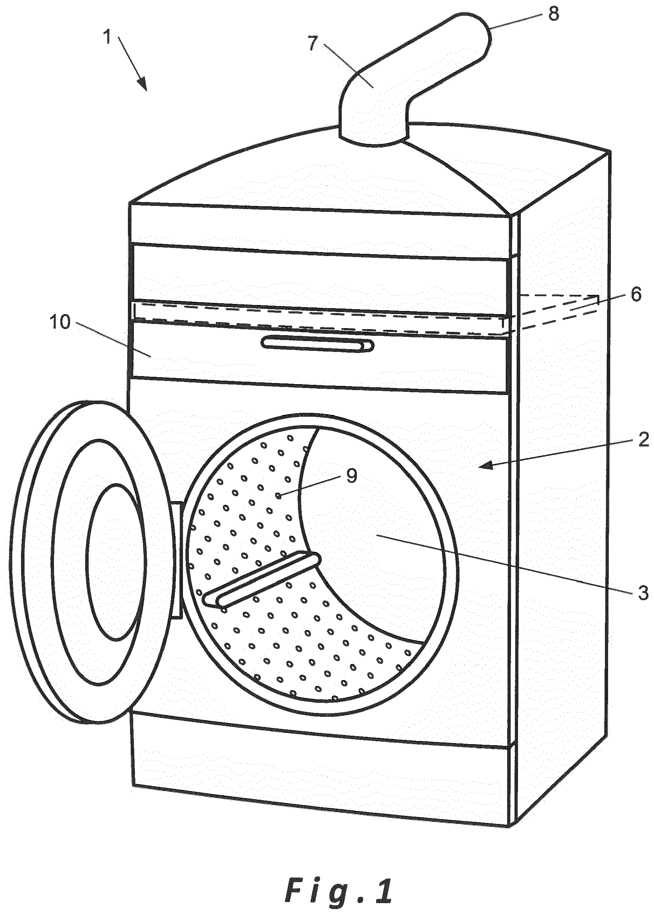

La figure 1 illustre un séchoir 1 selon l'invention. Ce séchoir 1 présente un corps 2 de séchoir, un tambour rotatif correspondant à une chambre de séchage 3 et étant agencé pour être entrainé par un moteur, un système de circulation d'air 7 comprenant un dispositif d'aspiration 4 (non visible) d'air extérieur au départ d'un milieu environnement par une entrée d'air 8, un dispositif de chauffage 5 (non visible) agencé pour chauffer l'air extérieur aspiré avant qu'il ne gagne la chambre de séchage 3 et un filtre absolu 6 présentant une face supérieure et une face inférieure. Comme illustré, afin que l'air aspiré et chauffé puisse gagner la chambre de séchage 3, cette dernière est munie d'orifices 9 d'entrée d'air. Par ailleurs, selon l'invention, le séchoir 1 comprend, en façade, une première trappe 10 d'accès à un espace 11 situé sous la face inférieure du filtre absolu 6 et, à l'arrière du séchoir 1 une deuxième trappe 12 d'accès (non visible) à un raccord 13 (non visible) situé au-dessus de la face supérieure dudit filtre absolu 6, ce raccord 13 étant agencé pour être raccordé à dispositif 14 (non illustré) de pulsion d'air chargé en une quantité prédéterminée de gouttelettes 15 d'un aérosol 16, par exemple en gouttelettes de DOP ou de DEHS.

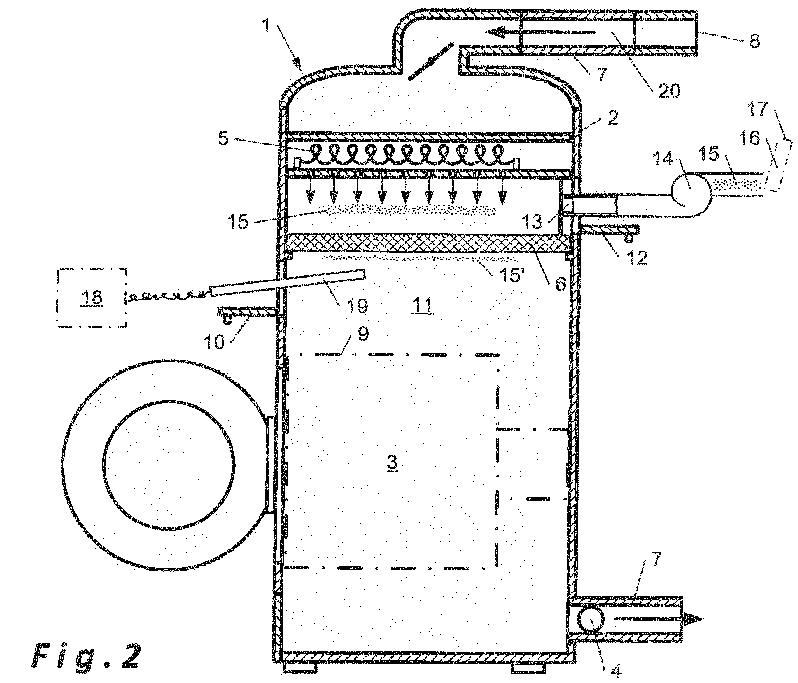

La figure 2 est une vue de côté d'un séchoir 1 selon l'invention. Comme illustré, lors de la réalisation d'un test de type DOP, la deuxième trappe 12 (située à l'arrière du séchoir) d'accès à un raccord 13 est ouverte pour permettre de raccorder un dispositif 14 de pulsion d'air chargé en une quantité prédéterminée de gouttelettes 15 d'un aérosol 16 en direction de la face supérieure du filtre absolu 6 pour que cet air chargé en une quantité prédéterminée de gouttelettes 15 d'un aérosol 16 (DOP) passe au travers du filtre absolu 6. Par exemple, l'aérosol 16 est injecté à l'aide d'un dispositif d'injection 17 dans le flux d'air pulsé de telle sorte que l'air pulsé soit chargé en gouttelettes 15 de l'aérosol 16.

Lors de la réalisation de ce même test DOP, la première trappe 10 d'accès à un espace 11 situé sous la face inférieure du filtre absolu 6 est également ouverte pour permettre à une sonde 19 d'un dispositif de mesure 18 (par exemple d'un photomètre) d'être glissée dans l'espace 11 situé sous la face inférieure du filtre absolu 6. De cette façon, par déplacement de la sonde 19 sous l'ensemble de la surface du filtre absolu 6, une mesure aisée de la quantité de gouttelettes 15' de l'aérosol 16 ayant pu traverser le filtre absolu 6 peut être réalisée. Ceci permet de détecter la présence éventuelle de fissures et/ou de fuites au niveau du filtre, ce qui se traduit par une détection et une mesure d'une quantité supérieure à une valeur seuil prédéterminée de gouttelettes ayant gagné l'espace 11 sous le filtre absolu 6. Ceci permet également, lorsque la sonde 19 scanne les bords du filtre absolu 6 de déterminer si ce dernier est positionné correctement dans le corps 2 de séchoir, c'est-à-dire si ce dernier est placé de façon étanche afin de ne pas laisser passer de particules contaminantes. Eventuellement, un préfiltre 20 est prévu au niveau de l'entrée d'air 8.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Séchoir (1), en particulier pour le séchage de vêtements et d'accessoires pour salle blanche, comprenant :
- un corps (2) de séchoir,
- une chambre de séchage (3),
- un système de circulation d'air (7) entre une entrée d'air (8) et ladite chambre de séchage (3), ce système (7) comprenant
- un dispositif d'aspiration (4) d'air conférant un sens d'écoulement à l'air depuis l'entrée d'air (8) vers ladite chambre de séchage (3),
- un dispositif de chauffage (5) de l'air aspiré placé en amont de ladite chambre de séchage (3), et
- un filtre absolu (6) placé en amont de ladite chambre de séchage (3),
ledit séchoir (1) étant **caractérisé en ce qu'**il comprend en outre, en amont dudit filtre absolu (6), un raccord (13) agencé pour être relié à un dispositif (14) de pulsion d'air chargé en une quantité prédéterminée de gouttelettes (15) d'un aérosol (16) et **en ce qu'**il comprend un accès à un espace (11) situé en aval dudit filtre absolu (6) et en amont de ladite chambre de séchage (3), ledit accès à un espace (11) étant agencé pour pouvoir accueillir un dispositif de mesure (18).

2. Séchoir (1) selon la revendication 1, **caractérisé en ce que** ledit espace (11) situé en aval dudit filtre absolu (6) s'étend sous l'ensemble dudit filtre absolu (6).

3. Séchoir (1) selon la revendication 1 ou 2, caractérisé en ce ledit accès à un espace (11) situé en aval dudit filtre absolu (6) est situé derrière une première trappe (10).

4. Séchoir (1) selon l'une quelconque des revendications précédentes, **caractérisé en ce que** ledit raccord (13) en amont dudit filtre absolu (6) est situé derrière une deuxième trappe (12).

5. Séchoir (1) selon la revendication 3, **caractérisé en ce que** ladite première trappe (10) comprend au moins un moyen d'étanchéisation permettant d'en assurer une fermeture étanche.

6. Séchoir selon (1) la revendication 4, **caractérisé en ce que** ladite deuxième trappe (12) comprend au moins un moyen d'étanchéisation permettant d'en assurer une fermeture étanche.

7. Séchoir (1) selon l'une quelconque des revendications précédentes, **caractérisé en ce que** ledit filtre absolu (6) est un filtre absolu à haute ou à très haute intégrité, par exemple un filtre de type EPA, HEPA ou ULPA.

8. Séchoir (1) selon l'une quelconque des revendications précédentes, **caractérisé en ce qu'**il comprend en outre un dispositif (14) de pulsion d'air chargé en une quantité prédéterminée de gouttelettes (15) d'un aérosol (16), ledit dispositif étant relié audit raccord (13).

9. Utilisation d'un séchoir (1) selon l'une quelconque des revendications 1 à 8 pour réaliser une mesure de l'intégrité dudit filtre absolu (6).

## Patentansprüche

1. Trockner (1), insbesondere zum Trocknen von Reinraumkleidung und - zubehör, umfassend:
- einen Trocknerkörper (2),
- eine Trocknungskammer (3),
- ein System zum Umwälzen von Luft (7) zwischen einem Lufteinlass (8) und der Trocknungskammer (3), wobei dieses System (7) umfasst
- eine Vorrichtung zum Ansaugen (4) von Luft, die der Luft eine Strömungsrichtung vom Lufteinlass (8) in Richtung der Trocknungskammer (3) verleiht,
- eine Vorrichtung zum Heizen (5) der angesaugten Luft, die stromaufwärts der Trocknungskammer (3) platziert ist, und
- einen Absolutfilter (6), der stromaufwärts der Trocknungskammer (3) platziert ist,
wobei der Trockner (1) **dadurch gekennzeichnet ist, dass** er stromaufwärts des Absolutfilters (6) weiter einen Anschluss (13) umfasst, der dafür eingerichtet ist, mit einer Vorrichtung (14) zum Pulsieren von Luft verbunden zu werden, die mit einer vorbestimmten Menge an Tröpfchen (15) eines Aerosols (16) geladen ist, und dadurch, dass er einen Zugang zu einem Raum (11) umfasst, der stromabwärts des Absolutfilters (6) und stromaufwärts der Trocknungskammer (3) liegt, wobei der Zugang zu einem Raum (11) dafür eingerichtet ist, eine Messvorrichtung (18) aufnehmen zu können.

2. Trockner (1) nach Anspruch 1, **dadurch gekennzeichnet, dass** sich der stromabwärts des Absolutfilters (6) liegende Raum (11) unter der Gesamtheit des Absolutfilters (6) erstreckt.

3. Trockner (1) nach Anspruch 1 oder 2, **dadurch gekennzeichnet, dass** der Zugang zu einem stromabwärts des Absolutfilters (6) liegenden Raum (11) hinter einer ersten Klappe (10) liegt.

4. Trockner (1) nach einem der vorstehenden Ansprüche, **dadurch gekennzeichnet, dass** der Anschluss (13) stromaufwärts des Absolutfilters (6) hinter einer zweiten Klappe (12) liegt.

5. Trockner (1) nach Anspruch 3, **dadurch gekennzeichnet, dass** die erste Klappe (10) mindestens ein Dichtungsmittel umfasst, das es ermöglicht, ein dichtes Schließen derselben sicherzustellen.

6. Trockner nach (1) Anspruch 4, **dadurch gekennzeichnet, dass** die zweite Klappe (12) mindestens ein Dichtungsmittel umfasst, das es ermöglicht, ein dichtes Schließen derselben sicherzustellen

7. Trockner (1) nach einem der vorstehenden Ansprüche, **dadurch gekennzeichnet, dass** der Absolutfilter (6) ein Absolutfilter mit hoher oder mit sehr hoher Integrität ist, zum Beispiel ein Filter vom Typ EPA, HEPA oder ULPA.

8. Trockner (1) nach einem der vorstehenden Ansprüche, **dadurch gekennzeichnet, dass** er weiter eine Vorrichtung (14) zum Pulsieren von Luft umfasst, die mit einer vorbestimmten Menge an Tröpfchen (15) eines Aerosols (16) geladen ist, wobei die Vorrichtung mit dem Anschluss (13) verbunden ist.

9. Verwendung eines Trockners (1) nach einem der Ansprüche 1 bis 8, um eine Messung der Integrität des Absolutfilters (6) auszuführen.

## Claims

1. Dryer (1), particularly for drying clean-room garments and accessories, comprising:
- a dryer body (2),
- a drying chamber (3),
- a system for circulating air (7) between an air inlet (8) and said drying chamber (3), with this system (7) comprising
- a device for aspirating (4) air conferring a direction of flow to the air from the air inlet (8) to said drying chamber (3),
- a device for heating (5) aspirated air placed upstream of said drying chamber (3), and
- an absolute filter (6) placed upstream of said drying chamber (3),
said dryer (1) being **characterised in that** it further comprises, upstream of said absolute filter (6), a connector (13) arranged to be connected to a device (14) for pulsing air loaded with a predetermined quantity of droplets (15) of an aerosol (16) and **in that** it comprises an access to a space (11) located downstream of said absolute filter (6) and upstream of said drying chamber (3), said access to a space (11) being arranged to be able to receive a measuring device (18).

2. Dryer (1) according to claim 1, **characterised in that** said space (11) located downstream of said absolute filter (6) extends over the entire said absolute filter (6).

3. Dryer (1) according to claim 1 or 2, **characterised in that** said access to a space (11) located downstream of said absolute filter (6) is located behind a first trapdoor (10).

4. Dryer (1) according to any preceding claim, **characterised in that** said connector (13) upstream of said absolute filter (6) is located behind a second trapdoor (12).

5. Dryer (1) according to claim 3, **characterised in that** said first trapdoor (10) comprises at least one sealing means making it possible to ensure a seal thereof.

6. Dryer according (1) to claim 4, **characterised in that** said second trapdoor (12) comprises at least one sealing means making it possible to ensure a seal thereof.

7. Dryer (1) according to any preceding claim, **characterised in that** said absolute filter (6) is an absolute filter with high or very high integrity, for example a filter of the EPA, HEPA or ULPA type.

8. Dryer (1) according to any preceding claim, **characterised in that** it further comprises a device (14) for pulsing air loaded with a predetermined quantity of droplets (15) of an aerosol (16), said device being connected to said connector (13).

9. Use of a dryer (1) according to any of claims 1 to 8 to take a measurement of the integrity of said absolute filter (6).
